# EUROPÄISCHE PATENTSCHRIFT

(11) **EP 2 309 612 B1**
(45) Veröffentlichungstag und Bekanntmachung des Hinweises auf die Patenterteilung: **27.03.2013**
(21) Anmeldenummer: 10013006.1
(22) Anmeldetag: 01.10.2010
(51) Int. Cl.: H02G 3/04, H02G 3/06

(54) **Winkelformteil für Kabelkanäle**
Moulded edge for cable channels
Elément de formage d'angle pour canaux de câbles

(30) Priorität: 09.10.2009 DE 202009013622 U
(43) Veröffentlichungstag der Anmeldung: 13.04.2011
(73) Patentinhaber: Tehalit GmbH, 67716 Heltersberg (DE)
(72) Erfinder: Schnurr, Richard, 66957 Vinngen (DE); Mattfeldt, Thiemo, 66484 Winterbach (DE)
(74) Vertreter: Nuss, Laurent

(56) Entgegenhaltungen:
- EP-A2- 1 178 251
- FR-A1- 2 924 867

## Beschreibung

Die vorliegende Erfindung bezieht sich auf ein verstellbares Winkelformteil zur Verbindung zweier Kabelkanalabschnitte, welche in einem Eckbereich stumpf aneinander stoßen.

Kabelkanäle werden zum einen zur Halterung und zur Abdeckung von Kabeln, die entlang der Wände eines Gebäudes verlegt werden, und zum anderen auch zur Anbringung entsprechender elektrischer Installationsgeräte, wie z.B. Schalter, Steckdosen oder Anschlussdosen, genutzt. Dabei bleiben die Kabelkanäle in den meisten Fällen frei sichtbar, was demzufolge Bemühungen nach sich zieht, diese in einem möglichst attraktiven, zugleich aber auch zweckmäßigen Design zu gestalten.

Ein Kabelkanal setzt sich in der Regel aus geraden Kabelkanalabschnitten zusammen, die in Ecken innerhalb des Gebäudes über sogenannte Winkelstücke miteinander verbunden sind. Diese Winkelstücke sind meist als starre Komponenten ausgebildet, welche normalerweise konstruktiv so angepasst sind, dass sie die geraden Kabelkanalabschnitte über einen rechten Winkel in entweder einer inneren oder äußeren Gebäudeecke aneinanderfügen.

Gebäudeecken weichen jedoch häufig vom rechten Winkel ab, und in solchen nicht rechtwinkligen Ecken ist es daher unmöglich, eine zufriedenstellende Verbindung zwischen einem starren 90°-Winkelstück und zwei geraden Kabelkanalabschnitten, welche zwischen sich einen anderen Winkel einschließen, zu erhalten. Die Teile passen nicht mehr zusammen und dies bedeutet, dass in Abhängigkeit von der Größe der Abweichungen größere oder kleinere Spalten an den Stellen entstehen können, an denen die geraden Kabelkanalabschnitte in das Winkelstück münden bzw. an denen die Hinterkanten der Verbindungsflansche nicht mehr bündig mit den Wänden in der Ecke des Gebäudes abschließen, was den allgemeinen optischen Eindruck des gewünschten Kabelkanaldesigns entstellt.

In einem solchen Fall ist es notwendig, dem Installateur ein verstellbares Winkelstück zur Verfügung zu stellen, das eine flexible Anpassung der Eckverbindung an die jeweils im Gebäude vorgefundenen konstruktiven Umgebungsbedingungen ermöglicht. Diese vorgenannten verstellbaren Winkelstücke gehören ebenfalls schon lange zum Stand der Technik und bestehen in der Regel aus zwei mit den jeweiligen Kabelkanalabschnitten verbundenen Abdeckflügeln, die miteinander gelenkig verbunden sind, wobei diese gelenkige Verbindung der Abdeckflügel in einer besonders einfachen, beispielsweise in der EP 1 178 251 A1 oder in der FR 2 924 867 A1 vorbeschriebenen Weise dadurch realisiert ist, dass einer der beiden Abdeckflügel mindestens einen Zapfen aufweist, während der andere Abdeckflügel mindestens ein bogenförmiges Langloch zur Aufnahme dieses Zapfens besitzt. Das bogenförmige Langloch hat eine Krümmung und eine Länge, die den Zapfen innerhalb des Langlochs zwangsweise führt und dadurch eine Drehbewegung des einen Abdeckflügels relativ zum anderen Abdeckflügel um eine Drehachse außerhalb der Zapfen-Langloch-Führung über einen vorbestimmten relativen Drehwinkelbereich erlaubt, wenn die beiden Abdeckflügel miteinander im Eingriff stehen.

Ein solches verstellbares Winkelstück weist aber den Nachteil auf, dass die relative Drehbewegung der beiden Abdeckflügel zueinander durch den Anschlag des Zapfens an den beiden Langlochenden limitiert wird, weshalb mit solchen Winkelstücken in Gebäudeecken nur Abweichungen vom rechten Winkel ausgeglichen werden können, die innerhalb weniger Grad, gewöhnlich im Bereich von ± 7°, liegen. Eine Winkelverstellbarkeit von ± 7° reicht aber insbesondere nicht aus, um in deutlich stumpfen Gebäudeecken mit Winkeln von 100° und mehr, die sich aus technischen, architektonischen oder statischen Gründen ergeben können, eine ästhetische Kaschierung der dort zusammentreffenden Kabelkanalenden erzielen zu können.

Die vorliegende Erfindung stellt sich daher die Aufgabe, diesen Nachteil zu beseitigen und ein Winkelformteil aus zwei über eine Zapfen-Langloch-Verbindung drehbar miteinander gekoppelten Abdeckflügeln anzugeben, das auch bei Ecken, deren Winkel von 90° deutlich, beispielsweise um über 10°, abweicht, verwendet werden kann und dabei trotzdem schnell und einfach entlang dieses vergrößerten Winkelbereiches verstellbar ist und in jeder Winkelstellung eine Kaschierung ermöglicht.

Gelöst wird diese Aufgabe durch ein Winkelformteil mit den Merkmalen des Anspruchs 1.

Dank der erfindungsgemäßen Vorrichtung kann der Installateur nach Erreichen einer vormals von der Zapfen-Langloch-Führung limitierten maximalen Winkelstellung beim Anschlag des Zapfens am Langlochende den zwischen den Abdeckflügeln eingeschlossenen Winkel noch weiter vergrößern, indem er die Abdeckflügel manuell durch Drehung um den in Anschlagsstellung befindlichen Zapfen weiter zueinander aufspreizt. Durch eine noch zu erläuternde vorteilhafte Anordnung der Zapfen-Langloch-Verbindung in Bezug auf die einander zugewandten Endkanten der Abdeckflügel ist gewährleistet, dass dieser zusätzlich bereitgestellte Drehwinkelbereich in keiner Winkelstellung durch eine Kollision der Abdeckflügel blockiert wird. Hierzu und um einen optisch perfekten Eindruck des Winkelstücks auch über den zusätzlich bereitgestellten vergrößerten Drehwinkelbereich zu erzielen, sind die bei der Drehung um die Zapfen-Längsachse in Kontakt stehenden Endkanten der Abdeckflügel in ihrem Profil so aneinander angepasst, dass diese aufeinander abrollen können, ohne dass sich dabei ein unschöner Spalt ausbildet, der den Blick auf das Kabelkanalinnere freigeben würde.

Die Abdeckflügel des erfindungsgemäßen Winkelformteils weisen jeweils eine Seitenwange und mindestens eine von der Seitenwange abgewinkelte Deckwange auf, wobei die Abdeckflügel jeweils mittels auf der Innenseite der Seitenwange vorgesehenen Rastelementen auf die in der Ecke zusammentreffenden Kabelkanalabschnitte, genauer gesagt auf die Unterteile dieser Kabelkanalabschnitte, aufgerastet werden, so dass im Eckbereich die Seitenwangen der Abdeckflügel die Abdeckungen der Kabelkanalunterteile bilden, während die Deckwangen die entsprechenden Seitenwände der Kabelkanalunterteile überdecken. Auf diese Weise wird durch das erfindungsgemäße Winkelformteil ein optisch stetiger Übergang auch im Eckverbindungsbereich der Kabelkanäle garantiert, ohne dass hierbei für den Betrachter die unschönen Schnittkanten der stumpf aneinander stoßenden Kabelkanalabschnitte oder gar irgendwelche unansehnlichen Spalten zwischen dem Winkelformteil und den Kabelkanalabschnitten sichtbar sind.

Gemäß einer Weiterbildung des erfindungsgemäßen Winkelformteils sind die Seitenwangen der Abdeckflügel wiederum in zwei Wandabschnitte unterteilt, und zwar in einen planen Wandabschnitt, der zur Abdeckung des Unterteils des jeweiligen Kabelkanalendes dient, und in einen bogenförmigen Wandabschnitt, der im ersten reduzierten Drehwinkelbereich, d.h. im Winkelbereich, bei dem die Drehung durch die gleichzeitige Verschiebebewegung des Zapfens im Langloch geführt ist, den bogenförmigen Wandabschnitt des gegenüberliegenden Abdeckflügels anliegend überlappt. Die bogenförmig gekrümmte Längsachse des Langlochs verläuft dabei parallel zu den aneinander anliegenden bogenförmigen Wandabschnitten der Abdeckflügel, so dass in vorteilhafter Weise in jeder Drehwinkelstellung des Zapfens im Langloch eine flächige Anlage zwischen den Seitenwangen der Abdeckflügel gegeben ist, was die Präzision und Stabilität der Drehführung verbessert.

Zur weiteren Verbesserung der Drehführung zwischen den Abdeckflügeln sind die Zapfen-Langloch-Verbindungen bei einer bevorzugten Ausführungsform des erfindungsgemäßen Winkelformteils so gestaltet, dass der Zapfen bzw. das Langloch jeweils an einem auf der Innenseite der Seitenwange angeordneten horizontalen Steg an- bzw. ausgeformt ist, wobei an einem Abdeckflügel der Steg über Abstützschenkel mit der Seitenwange verbunden ist, so dass zwischen dem Steg und der Seitenwange ein freier Spalt verbleibt, während am anderen Abdeckflügel der horizontale Steg direkt an die Seitenwange angeformt ist. Der somit in einem der Abdeckflügel zwischen Steg und Seitenwange freigelassene Spalt entspricht in seiner Stärke der Dicke der Seitenwange des gegenüberliegenden Abdeckflügels, so dass diese Seitenwange passgenau in den Spalt eingeführt werden kann, wodurch in beide Richtungen senkrecht zur Seitenwangenfläche eine gegenseitige Abstützung der beiden Abdeckflügel auch während der relativen Drehverstellung bewirkt wird.

Damit keine unschönen Überstände zwischen den Abdeckflügeln beim Verdrehen auftreten, sind gemäß einer weiteren vorteilhaften Weiterbildung der vorliegenden Erfindung die Seitenwangen der Abdeckflügel so gestaltet, dass deren freie, einander zugewandte Kanten jeweils in Form einer dreieckförmigen Spitze zusammenlaufen, wobei diese Spitzen der beiden Deckwangen im Winkelformteil deckungsgleich aufeinander zu liegen kommen und wobei diese deckungsgleiche Lage der Spitzen ohne nachteilige Überstände auch nicht durch die Relativdrehung der Abdeckflügel beeinträchtigt wird, weil die Drehachse im ersten Drehwinkelbereich, d.h. bei gleichzeitiger Verschiebung des Zapfens im Langloch, durch die aufeinanderliegenden Spitzen der Deckwangen verläuft.

Weitere Vorteile, Merkmale und Einzelheiten der Erfindung werden in dem nachfolgenden Teil der Beschreibung anhand der beiliegenden Zeichnungen erläutert.

Es zeigen
- Fig. 1: eine perspektivische Darstellung der Außenseite eines erfindungsgemäßen Winkelformteils, das zwischen zwei in einer Innenecke zusammentreffenden Kabelkanälen angeordnet ist;
- Fig. 2: eine perspektivische Darstellung der Innenseite des Winkelformteils aus Fig. 1;
- Fig. 3: einen horizontalen Schnitt durch das Winkelformteil gemäß Fig. 1 und 2 in der Ebene einer Zapfen-Langloch-Verbindung bei einer ersten relativen Winkelstellung der beiden Abdeckflügel;
- Fig. 4: einen horizontalen Schnitt durch das Winkelformteil gemäß Fig. 1 und 2 in der Ebene einer Zapfen-Langloch-Verbindung bei einer zweiten relativen Winkelstellung der beiden Abdeckflügel;
- Fig. 5: einen horizontalen Schnitt durch das Winkelformteil gemäß Fig. 1 und 2 in der Ebene einer Zapfen-Langloch-Verbindung bei einer dritten relativen Winkelstellung der beiden Abdeckflügel.

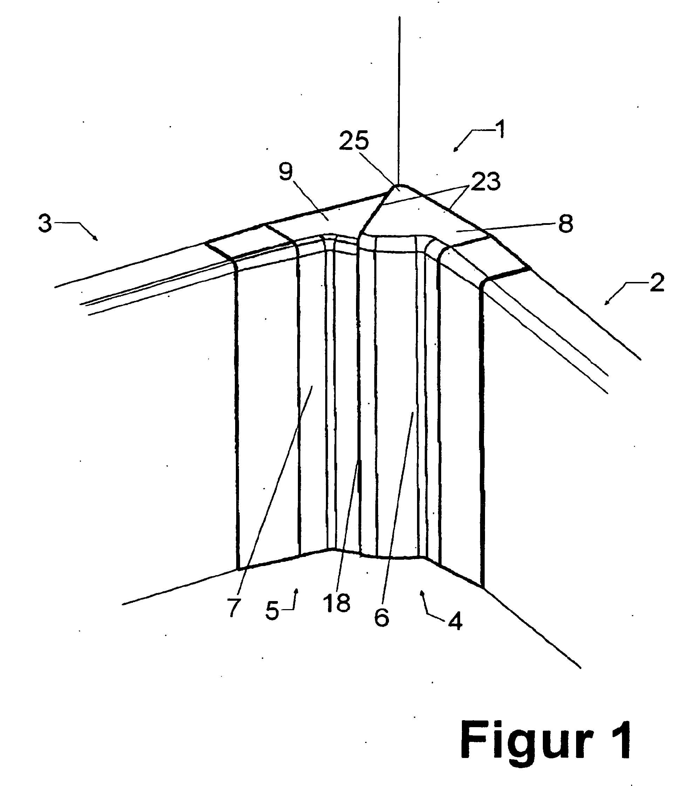

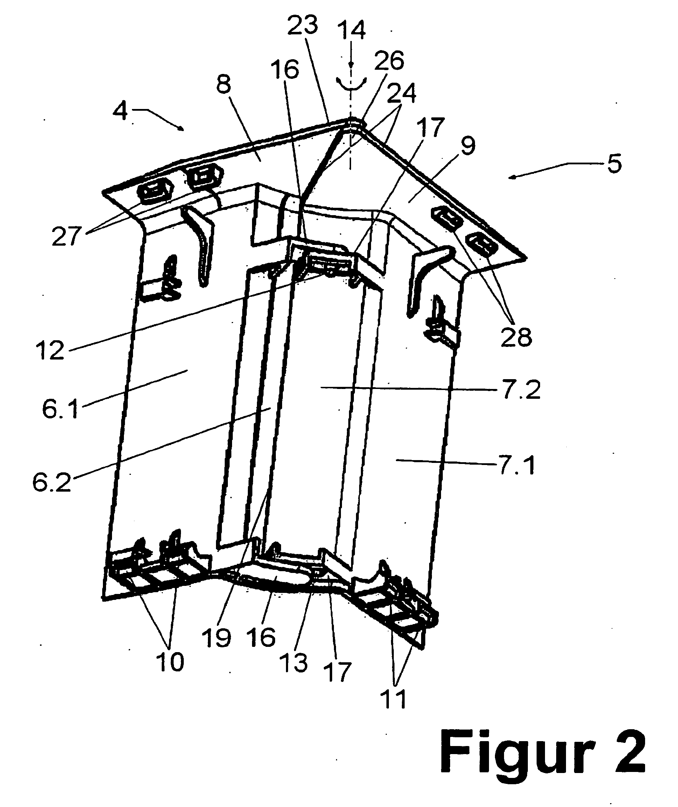

In den Figuren 1 und 2 ist eine bevorzugte Ausgestaltung des erfindungsgemäßen Winkelformteils 1 dargestellt, das gemäß Fig. 1 zur Verbindung zweier in einem Eckbereich stumpf aneinander stoßender Kabelkanalabschnitte 2, 3 dient, wobei diese Kabelkanalabschnitte 2, 3 zueinander in einem Winkel ausgerichtet sind, welcher dem Winkel zwischen den in der Gebäudeecke zusammentreffenden Gebäudewänden entspricht. Im Idealfall sollte dieser Winkel 90° betragen, wobei jedoch in der Praxis die Wände häufig deutlich vom rechten Winkel in beabsichtigter oder unbeabsichtigter Weise abweichen.

Um eine Adaptation an unterschiedliche Winkelstellungen der Kabelkanalabschnitte 2, 3 zu erlauben, ist das Winkelformteil 1 winkelverstellbar ausgeführt, wobei es zu diesem Zweck, was insbesondere aus Fig. 2 ersichtlich ist, über einen zweiteiligen Aufbau aus zwei Abdeckflügeln 4, 5 verfügt, die an einem Längsende über auf ihrer Innenseite angeformte Rastelemente 10, 11, 27, 28 jeweils mit einem der Kabelkanalabschnitte 2, 3 und am anderen Längsende miteinander gelenkig und verschiebbar verbunden sind.

Die beiden relativ zueinander verdrehbaren Abdeckflügel 4, 5 des Winkelformteils 1 sind zueinander spiegelsymmetrisch, sonst aber im Wesentlichen identisch ausgebildet und weisen übereinstimmend ein im Querschnitt annähernd L-förmiges Profil mit jeweils einer Seitenwange 6, 7 und mit jeweils einer von der Oberkante dieser Seitenwange 6, 7 rechtwinklig abgebogenen Deckwange 8, 9 auf.

Auf der Innenseite der Abdeckflügel 4, 5 (vgl. Fig. 2), d.h. auf der Seite, die im späteren Einbauzustand unsichtbar zu den Enden der Kabelkanalabschnitte 2, 3 und somit zur Gebäudeecke gewandt ist, besitzen sowohl die Seitenwangen 6, 7 als auch die Deckwangen 8, 9 Rastelemente 10, 11, 27, 28 in Form elastisch federnder Rastnasen, die im Einbauzustand nach Fig. 1 auf nicht dargestellte Weise mit an den Unterteilen der jeweiligen Kabelkanalabschnitte 2, 3 vorgesehenen Gegenrastelementen, beispielsweise in Form von Rastnuten oder Rastausnehmungen, formschlüssig verrasten.

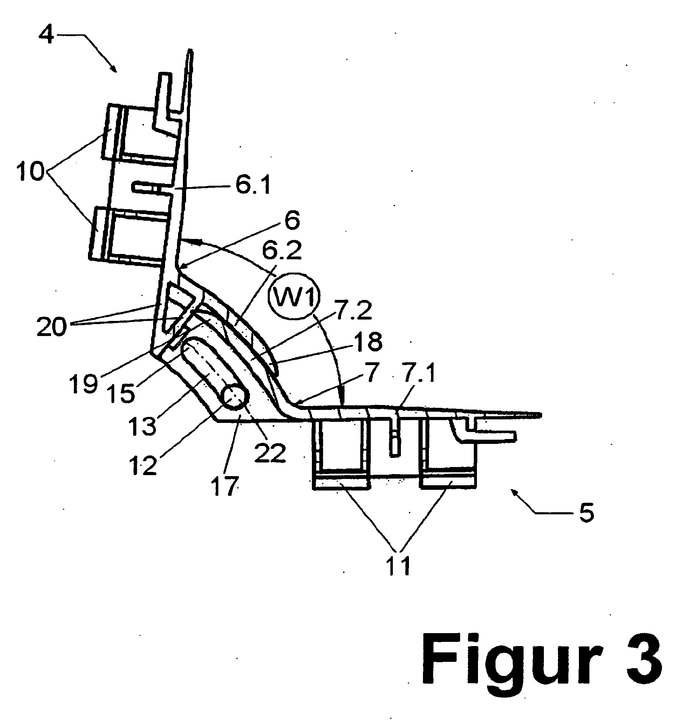

Besonderes Augenmerk verdienen die Schnittdarstellungen gemäß den Figuren 3 bis 5, da hier der eigentliche Kern der vorliegenden Erfindung, nämlich die Möglichkeit des Einsatzes des vorliegenden Winkelformteils 1, innerhalb eines vergrößerten Winkelbereiches W1 bis

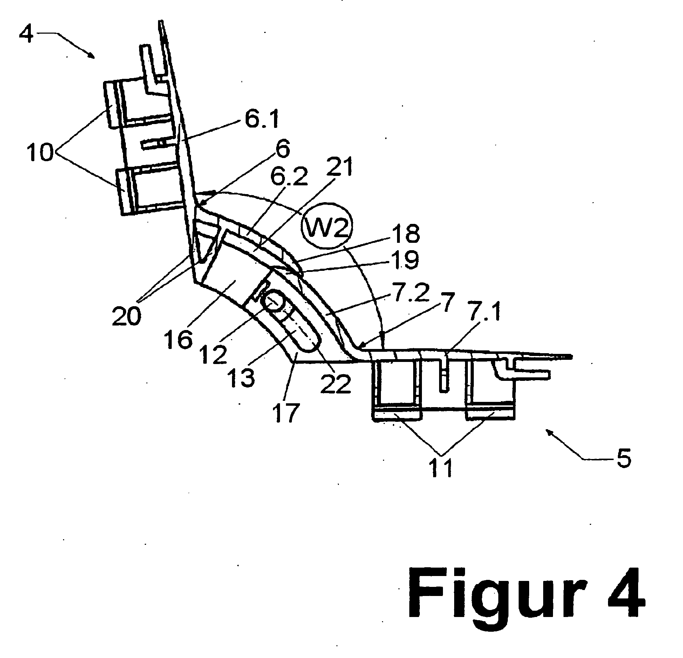

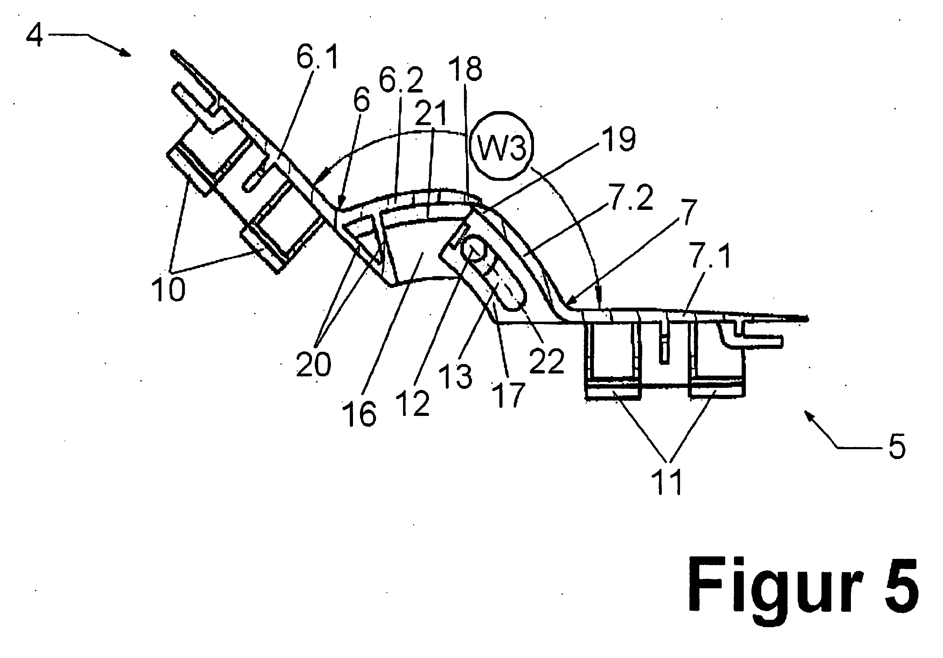

W3 anschaulich illustriert wird. Hierbei gilt es, zwei grundsätzlich unterschiedliche Dreh-Verstellmechanismen zu unterscheiden: eine aus bisherigen Lösungen, z.B. aus der FR 2 924 867 A1 bekannte Verstellung in einem reduzierten Drehwinkelbereich W1 bis W2, der meist lediglich Abweichungen von ± 7° aus der "normalen" 90°-Stellung kompensieren kann und durch den Übergang von Fig. 3 zu Fig. 4 ersichtlich ist, sowie einen die vorliegende Erfindung kennzeichnenden, zusätzlich bereitgestellten Extra-Winkelbereich W2 bis W3, der bis zu einer Maximalstellung von etwa 135° reicht und der durch den Übergang von Fig. 4 zu Fig. 5 ersichtlich ist.

Die Drehverstellung im ersten Drehwinkelbereich W1 bis W2 von einem zwischen den Abdeckflügeln 4, 5 eingeschlossenen Winkel W1 (Fig. 3) zu einem zwischen den Abdeckflügeln 4, 5 eingeschlossenen Winkel W2 (Fig. 4) wird durch eine Zapfen-Langloch-Verbindung 12, 13 ermöglicht. Zu diesem Zweck sind an der Innenseite der beiden Abdeckflügel 4, 5 im oberen und unteren Endbereich der Seitenwangen 6, 7 auf zueinander gleicher Höhe jeweils zwei horizontale Stege 16, 17 angeformt, wobei am zum gegenüberliegenden Abdeckflügel 4, 5 gewandten Längsende dieser Stege 16, 17 bei einem Abdeckflügel 4 jeweils ein Zapfen 16 aus der Ober- bzw. Unterseite des Steges 16 austritt, während am anderen Abdeckflügel 5 jeweils ein bogenförmiges Langloch 13 in die beiden Stege 17 eingebracht ist, in welche jeweils der Zapfen 16 des gegenüberliegenden Abdeckflügels 4 eingreift. Die Langlochbreite entspricht dabei jeweils dem Zapfendurchmesser, so dass sich die Zapfen 12 in diesen beiden Langlöchern 13 nur zwangsweise in Richtung der Längsachse 22 der Langlöcher 13 bis zum Anschlag an die jeweils beiden Langlochenden 15 bewegen können, wobei diese beiden Anschlagsstellungen in Fig. 3 und 4 gezeigt sind. Diese zwangsgeführte Verschiebebewegung des Zapfens 12 im Langloch 13 geht einher mit einer relativen Drehung der beiden Abdeckflügel 4, 5 zueinander um eine gemeinsame Drehachse 14 außerhalb dieser Zapfen-Langloch-Führungen 12, 13 (vgl. Fig. 2). Die durch die Längskrümmung des Langlochs 13 vorgegebene relative Drehbewegung der Abdeckflügel 4, 5 ist dabei so an die Geometrie der Abdeckflügel 4, 5 angepasst, dass keine drehbehindernden Kollisionen oder die Ausbildung unschöner Spalten zwischen den Abdeckflügeln 4, 5 auftreten können.

In vorteilhafter Weise sind die Seitenwangen 6, 7 der beiden Abdeckflügel 4, 5 jeweils aus zwei Wandabschnitten 6.1, 7.1; 6.2, 7.2 aufgebaut. Aus einem ersten planen Wandabschnitt 6.1, 7.1, der auf das Kabelkanalunterteil aufgerastet wird, und aus einem bogenförmigen Wandabschnitt 6.2, 7.2, der den bogenförmigen Wandabschnitt 6.2, 7.2 des gegenüberliegenden Abdeckflügels 4, 5 unter Bildung einer Anlagefläche überlappt. Um diese Überlappung überhaupt möglich zu machen, sind an dem mit den Zapfen 12 ausgerüsteten Abdeckflügel 4 die innenseitigen, horizontalen Stege 16 nicht direkt, sondern jeweils über Abstützschenkel 20 an die Seitenwange 6 angeformt (vgl. Fig. 3 bis 5). So verbleibt bei diesem Abdeckflügel 4 ein freier Spalt 21 zwischen den Stegen 16 und dem bogenförmigen Wandabschnitt 6.2 der Seitenwange 6, in welchen der bogenförmige Wandabschnitt 7.2 der Seitenwange 7 des mit Langlöchern 13 versehenen Abdeckflügels 5 passgenau eingeführt werden kann. Durch diese konstruktive Ausgestaltung wird für eine stabilere und präzisere Führung der Abdeckflügel 4, 5 über den ersten Drehwinkelbereich vom relativen Drehwinkel W1 (Fig. 3) bis zum relativen Drehwinkel W2 (Fig. 4) gesorgt.

Mit Erreichen der Anschlagsstellung des Zapfens 12 am Langlochende 14 gemäß Fig. 4 wäre bei konventionellen Winkelstücken mit Zapfen-Langloch-Führungen die maximale Winkelstellung erreicht, und bei in stumpfen Eckwinkeln von z.B. über 100° aneinander anstoßenden Kabelkanalabschnitten 2, 3 könnte mit derartigen Winkelstücken eine ästhetische Kaschierung der Kabelkanalenden nicht mehr erzielt werden.

Das erfindungsgemäße Winkelformteil 1 erlaubt es dem Installateur auf der Baustelle hingegen, die Abdeckflügel 4, 5 noch weiter auseinander zu spreizen, bis ein Winkel W3 gemäß Fig. 5 zwischen den Abdeckflügeln 4, 5 erhalten wird.

Dieser Übergang der Drehwinkelstellung von Fig. 4 nach Fig. 5 wird nicht mehr durch eine Drehung um eine Achse 14 außerhalb der Zapfen-Langloch-Führung 12, 13 erreicht, wie noch beim Drehübergang von Fig. 3 nach Fig. 4, sondern durch eine Drehung um die Längsachse des in Anschlagstellung befindlichen Zapfens 12. Die Längsachsen der beiden Zapfen 12 fluchten gemäß Fig. 2 miteinander und bilden beim Drehübergang von Fig. 4 nach Fig. 5 eine scharnierartige Drehachse zwischen den beiden Hälften 4, 5 des Winkelformteils 1.

Die Zapfen 12 des Abdeckflügels 4 füllen somit eine Doppelfunktion aus: im ersten Drehwinkelbereich von W1 nach W2 sind sie noch reine Führungselemente, während sie im zweiten Drehwinkelbereich von W2 nach W3 als Drehkupplungselemente fungieren. Damit im zusätzlich bereitgestellten Drehwinkelbereich W2 bis W3 ebenfalls keine unschönen Spalten zwischen den Abdeckflügeln 4, 5 auftreten und die Wangen 6, 7, 8, 9 der Abdeckflügel 4, 5 sich auch nicht gegenseitig bei dieser Zusatzdrehung W2 bis W3 behindern, muss der Zapfen 12 beim Erreichen der Anschlagsstellung am Langlochende 15 gemäß Fig. 4 senkrecht oder annähernd senkrecht zu den einander zugewandten freien Endkanten 18, 19 der Seitenwangen 6, 7 der beiden Abdeckflügel 4, 5 stehen. Zu diesem Zweck müssen sich an beiden Abdeckflügeln 4, 5 die horizontalen Stege 16, 17 so weit erstrecken, dass bei einem Abdeckflügel 4 der an den Stegen 16 ausgebildete Zapfen 12 jeweils senkrecht oder annähernd senkrecht gegenüber der freien Endkante 18 der Seitenwange 6 liegt, während am anderen Abdeckflügel 5 das in die Stege 17 jeweils eingeformte Langloch 13 mit einem seiner Enden 15 ebenfalls senkrecht oder annähernd senkrecht gegenüber der freien Endkante 19 der Seitenwange 7 liegt.

Auf diese Weise ist garantiert, dass beim Erreichen der Anschlagsstellung gemäß Fig. 4 nur noch die Endkanten 18, 19 der Seitenwangen 6, 7 in Anlage stehen. Würden sich in dieser Anschlagsstellung gemäß Fig. 4 die Seitenwangen 6, 7 der Abdeckflügel 4, 5 noch überlappen, dann wäre eine Drehung eines Abdeckflügels 4, 5 um die Zapfen 12-Längsachse zwar noch möglich, allerdings würden die Seitenwangen 6, 7 bei dieser Verdrehung unästhetisch voneinander abstehen und einen unerwünschten Spalt zwischen sich bilden.

Beim erfindungsgemäßen Winkelformteil 1 hingegen rollen bei der Zusatzverdrehung vom relativen Winkel W2 zum relativen Winkel W3 nur die Endkanten 18, 19 der Seitenwangen 6, 7 der Abdeckflügel 4, 5 aufeinander ab. Diese Endkanten 18, 19 sind vorteilhafterweise durch Einarbeitung einer bogenförmigen Krümmung jeweils aneinander angepasst, so dass bei der gegenseitigen Abrollbewegung die Endkanten 18, 19 immer in bündig geschlossener Anlage verbleiben, ohne dass ein unschöner Spalt zwischen den Endkanten 18, 19 entsteht, der den Blick auf das Kabelkanalinnere freigeben würde. Mit Fig. 5 ist beim relativen Winkel W3 eine absolute Maximalstellung der Winkelverstellbarkeit erreicht. Bei einer Weiterdrehung würde sich die eine Endkante 18, 19 in unerwünschter Weise von der anderen abheben.

Abschließend bleibt folgendes festzuhalten: Durch die vorab beschriebenen konstruktiven Maßnahmen kann mit dem erfindungsgemäßen Winkelformteil 1 eine kontinuierliche Winkelverstellung im einem großen Winkelbereich von 83° bis 135° vorgenommen werden, ohne dass irgendwelche Teile des Winkelformteils 1 hierfür von einander getrennt oder umgesteckt oder in sonst einer zeitraubenden Weise umgebaut werden müssen.

## Patentansprüche

1. Verstellbares Winkelformteil (1) zur Verbindung zweier Kabelkanalabschnitte (2, 3), welche in einem Eckbereich stumpf aneinander stoßen, wobei das Winkelformteil (1) zwei Abdeckflügel (4, 5) umfasst, welche jeweils eine Seitenwange (6, 7) und zumindest eine von der Seitenwange (6, 7) abgewinkelte Deckwange (8, 9) aufweisen, und welche jeweils an der Innenseite der Seitenwange (6, 7) angeformte Rasteelemente (10, 11) besitzen, die jeweils mit Gegenrastelementen an den Unterteilen der Kabelkanalabschnitte (2, 3) zusammenwirken, und wobei ein Abdeckflügel (4) an seiner Innenseite wenigstens einen Zapfen (12) und der andere Abdeckflügel (5) an seiner Innenseite wenigstens ein bogenförmiges Langloch (13) zur Aufnahme dieses Zapfens (12) aufweist, so dass die Abdeckflügel (4, 5) über einen ersten Winkelbereich (W1 bis W2) durch eine Drehung um eine Achse (14) außerhalb der Zapfen-Langloch-Führung (12, 13) bei gleichzeitiger Verschiebebewegung des Zapfens (12) im Langloch (13) bis zum Erreichen einer Anschlagstellung des Zapfens (12) am Langlochende (15) relativ zueinander verdrehbar sind, **dadurch gekennzeichnet, dass** die Abdeckflügel (4, 5) an den Innenseiten ihrer Seitenwangen (6, 7) jeweils mit mindestens einem horizontalen Steg (16, 17) versehen sind, der sich jeweils bis zu einer zum benachbarten Abdeckflügel (5, 4) gewandten Endkante (18, 19) der Seitenwange (6, 7) erstreckt, wobei an bzw. in diesem Steg (16, 17) jeweils der Zapfen (12) bzw. das Langloch (13) so angeordnet ist, dass der Zapfen (12) bzw. das Langlochende (15) senkrecht oder annähernd senkrecht über der Endkante (18, 19) der Seitenwange (6, 7) steht, und wobei die Endkanten (18, 19) der Seitenwangen (6, 7) in ihrem Profil so aneinander angepasst sind, dass sie bei Drehung um den in Anschlagstellung befindlichen Zapfen (12) über einen zweiten Winkelbereich (W2 bis W3) in ständiger Anlage aufeinander abrollbar sind, ohne einen Spalt zwischen sich zu bilden.

2. Winkelformteil nach Anspruch 1, **dadurch gekennzeichnet, dass** die Seitenwangen (6, 7) der beiden Abdeckflügel (4, 5) jeweils aus zwei Wandabschnitten (6.1, 7.1; 6.2, 7.2) bestehen, einem planen Wandabschnitt (6.1, 7.1) zur Abdeckung des jeweiligen Kabelkanalunterteils und einem bogenförmigen Wandabschnitt (6.2, 7.2), der den bogenförmigen Wandabschnitt (6,2, 7.2) des gegenüberliegenden Abdeckflügels (4, 5) überlappt, um den Winkel zwischen den zu verbindenden Kabelkanalabschnitten (2, 3) zu verschließen.

3. Winkelformteil nach Anspruch 2, **dadurch gekennzeichnet, dass** die bogenförmigen Wandabschnitte (6.2, 7.2) der Seitenwangen (6, 7) der beiden Abdeckflügel (4, 5) im ersten Winkelbereich (W1 bis W2) flächig aneinander zur Anlage kommen.

4. Winkelformteil nach Anspruch 2 oder 3, **dadurch gekennzeichnet, dass** der Steg (16, 17) sich jeweils über oder annähernd über die volle Länge des bogenförmigen Wandabschnitts (6.2, 7.2) der Seitenwange (6, 7) erstreckt.

5. Winkelformteil nach einem der Ansprüche 1 bis 4, **dadurch gekennzeichnet, dass** bei einem Abdeckflügel (4) des Winkelformteils (1), der zumindest eine Steg (16) an von der Seitenwange (6) abstehenden Abstützschenkeln (20) angeformt ist, so dass zwischen dem Steg (16) und der Seitenwange (6) ein Spalt (21) verbleibt.

6. Winkelformteil nach Anspruch 5, **dadurch gekennzeichnet, dass** in den Spalt (21) zwischen dem mindestens einen Steg (16) und der Seitenwange (6) des einen Abdeckflügels (4) die Seitenwange (7) des anderen Abdeckflügels (5) passgenau oder annähernd passgenau eingeführt ist, so dass eine zusätzliche Führung zwischen den beiden Abdeckflügeln (4, 5) erzielt wird.

7. Winkelformteil nach einem der Ansprüche 1 bis 6, **dadurch gekennzeichnet, dass** die Endkanten (18, 19) der Seitenwangen (6, 7) der beiden Abdeckflügel (4, 5) bogenförmig gekrümmt sind.

8. Winkelformteil nach einem der Ansprüche 1 bis 7, **dadurch gekennzeichnet, dass** die Längsachse (22) des Langlochs (13) parallel zur Seitenwange (7) des Abdeckflügels (5) verläuft und/oder die Längsachse des Zapfens (12) sowie die Lochachse des Langlochs (13) jeweils parallel zu den Seitenwangen (6, 7) der Abdeckflügel (4, 5) verlaufen.

9. Winkelformteil nach einem der Ansprüche 1 bis 8, **dadurch gekennzeichnet, dass** an einem Abdeckflügel (4) zwei Stege (16) mit jeweils einem Zapfen (12) und am anderen Abdeckflügel (5) zwei Stege (17) mit jeweils einem Langloch (13) zur Aufnahme dieser Zapfen (12) vorgesehen sind, wobei die beiden Zapfen/Langloch-Führungen (12, 13) am oberen bzw. unteren Ende der Seitenwangen (6, 7) der Abdeckflügel (4, 5) positioniert sind.

10. Winkelformteil nach Anspruch 9, **dadurch gekennzeichnet, dass** die Zapfen (12) jeweils auf verschiedenen Seiten der beiden Stege (16) angebracht sind, so dass die Einführrichtungen der Zapfen (12) in das jeweilige Langloch (13) einander entgegengesetzt sind.

11. Winkelformteil nach einem der Ansprüche 1 bis 10, **dadurch gekennzeichnet, dass** die freien Kanten (23, 24) der Deckwangen (8, 9) an ihren zum gegenüberliegenden Abdeckflügel (4, 5) gewandten Ende jeweils unter Bildung einer dreieckförmigen Spitze (25, 26) zusammenlaufen, wobei im ersten Winkelbereich (W1 bis W2) diese Spitzen (25, 26) der beiden Abdeckflügel (4, 5) ohne gegenseitigen Überstand aufeinanderliegen und die Drehachse (14) innerhalb der aufeinanderliegenden Spitzen (25, 26) angeordnet ist.

12. Winkelformteil nach Anspruch 11, **dadurch gekennzeichnet, dass** die Spitze (25) der Deckwange (8) eines Abdeckflügels (4) bei Drehung um den in Anschlagstellung befindlichen Zapfen (12) über die Deckwange (9) des anderen Abdeckflügels (5) hinausragt, und dass an den Deckwangen (8, 9) im Bereich der Spitzen (25, 26) Sollbruchstellen oder Markierungen vorgesehen sind, um diesen Überstand zu entfernen.

13. Winkelformteil nach einem der Ansprüche 1 bis 12, **dadurch gekennzeichnet, dass** sich an der Innenseite der Deckwange (8, 9) der Abdeckflügel (4, 5) zusätzliche Rastelemente (27, 28) zur Verrastung mit dem Unterteil der jeweiligen Kabelkanalabschnitte (2, 3) befinden.

14. Winkelformteil nach einem der Ansprüche 1 bis 13, **dadurch gekennzeichnet, dass** im ersten Winkelbereich (W1 bis W2) ein Winkel von 83° bis 97° zwischen den beiden Abdeckflügeln vorliegt.

15. Winkelformteil nach einem der Ansprüche 1 bis 14, **dadurch gekennzeichnet, dass** im zweiten Winkelbereich (W2 bis W3) ein Winkel von 97° bis 135° zwischen den beiden Abdeckflügeln (4, 5) vorliegt.

## Claims

1. Adjustable angular moulding (1) for connecting two cable-channel portions (2, 3) which butt flush against one another in a corner region, wherein the angular moulding (1) comprises two covering wings (4, 5) which each have a side part (6, 7) and at least one top part (8, 9), angled away from the side part (6, 7), and which each have latching elements (10, 11), which are formed on the inner side of the side part (6, 7) and each interact with mating latching elements on the lower parts of the cable-channel portions (2, 3), and wherein one covering wing (4), on its inner side, has at least one pin (12) and the other covering wing (5), on its inner side, has at least one arcuate slot (13) for accommodating said pin (12), and therefore the covering wings (4, 5) can be rotated relative to one another over a first angle range (W1 to W2) by rotation about an axis (14) outside the pin/slot guide (12, 13), with simultaneous displacement of the pin (12) in the slot (13) until the pin (12) reaches a stop position against the slot end (15), **characterized in that** the covering wings (4, 5) are each provided, on the inner sides of their side parts (6, 7), with at least one horizontal crosspiece (16, 17), which extends in each case up to an end edge (18, 19) of the side part (6, 7), said end edge being directed towards the adjacent covering wing (5, 4), wherein the pin (12) is arranged on the crosspiece (16), respectively the slot (13) is arranged in the crosspiece (17), such that the pin (12) or the slot end (15) is located perpendicularly, or more or less perpendicularly, in relation to the end edge (18, 19) of the side part (6, 7), and wherein the profiles of the end edges (18, 19) of the side parts (6, 7) are adapted to one another such that, upon rotation about the pin (12) located in the stop position, the end edges can be rolled over a second angle range (W2 to W3), in constant abutment against one another, without a gap forming between them.

2. Angular moulding according to Claim 1, **characterized in that** the side parts (6, 7) of the two covering wings (4, 5) each comprise two wall portions (6.1, 7.1; 6.2, 7.2), a planar wall portion (6.1, 7.1), for covering the respective lower part of the cable channel, and an arcuate wall portion (6.2, 7.2), which overlaps the arcuate wall portion (6.2, 7.2) of the opposite covering wing (4, 5) in order to close the angle between the cable-channel portions (2, 3) which are to be connected.

3. Angular moulding according to Claim 2, **characterized in that** the arcuate wall portions (6.2, 7.2) of the side parts (6, 7) of the two covering wings (4, 5) come into surface abutment against one another in the first angle range (W1 to W2).

4. Angular moulding according to Claim 2 or 3, **characterized in that** the crosspiece (16, 17) extends in each case over, or more or less over, the entire length of the arcuate wall portion (6.2, 7.2) of the side part (6, 7).

5. Angular moulding according to one of Claims 1 to 4, **characterized in that**, in the case of one covering wing (4) of the angular moulding (1), the at least one crosspiece (16) is formed on supporting limbs (20) projecting from the side part (6), and therefore a gap (21) remains between the crosspiece (16) and the side part (6).

6. Angular moulding according to Claim 5, **characterized in that** the gap (21) between the at least one crosspiece (16) and the side part (6) of the one covering wing (4) has introduced into it in an accurately fitting, or more or less accurately fitting, manner the side part (7) of the other covering wing (5), and this therefore achieves additional guidance between the two covering wings (4, 5).

7. Angular moulding according to one of Claims 1 to 6, **characterized in that** the end edges (18, 19) of the side parts (6, 7) of the two covering wings (4, 5) are curved in arcuate form.

8. Angular moulding according to one of Claims 1 to 7, **characterized in that** the longitudinal axis (22) of the slot (13) runs parallel to the side part (7) of the covering wing (5) and/or the longitudinal axis of the pin (12) and the axis of the slot (13) each run parallel to the side parts (6, 7) of the covering wings (4, 5).

9. Angular moulding according to one of Claims 1 to 8, **characterized in that** two crosspieces (16) each with a pin (12) are provided on one covering wing (4) and two crosspieces (17) each with a slot (13) for accommodating said pins (12) are provided on the other covering wing (5), wherein the two pin/slot guides (12, 13) are positioned at the upper and lower ends of the side parts (6, 7) of the covering wings (4, 5).

10. Angular moulding according to Claim 9, **characterized in that** the pins (12) are each fitted on either side of the two crosspieces (16), and therefore the pins (12) are introduced into the respective slot (13) in opposite directions.

11. Angular moulding according to one of Claims 1 to 10, **characterized in that** the free edges (23, 24) of the top parts (8, 9) each come together, at their end directed towards the opposite covering wing (4, 5), to form a triangular tip (25, 26), wherein, in the first angle range (W1 to W2), these tips (25, 26) of the two covering wings (4, 5) are located one upon the other without protruding in relation to one another and the axis of rotation (14) is arranged within the tips (25, 26) located one upon the other.

12. Angular moulding according to Claim 11, **characterized in that** the tip (25) of the top part (8) of one covering wing (4), upon rotation about the pin (12) located in the stop position, projects beyond the top part (9) of the other covering wing (5), and **in that** predetermined breaking points or markings are provided on the top parts (8, 9), in the region of the tips (25, 26), in order for this protruding portion to be removed.

13. Angular moulding according to one of Claims 1 to 12, **characterized in that** additional latching elements (27, 28) are located on the inner side of the top part (8, 9) of the covering wings (4, 5) in order to latch to the lower part of the respective cable-channel portions (2, 3).

14. Angular moulding according to one of Claims 1 to 13, **characterized in that** an angle of 83° to 97° is present between the two covering wings in the first angle range (W1 to W2).

15. Angular moulding according to one of Claims 1 to 14, **characterized in that** an angle of 97° to 135° is present between the two covering wings (4, 5) in the second angle range (W2 to W3).

## Revendications

1. Pièce moulée d'angle (1) pour relier deux tronçons (2, 3) de caniveau de câbles qui sont jointifs bout à bout dans une région de coin, sachant que la pièce moulée d'angle (1) comprend deux ailes de recouvrement (4, 5), qui présentent chacune une paroi latérale (6, 7) et au moins une paroi supérieure (8, 9) recourbée à partir de la paroi latérale (6, 7), et qui possèdent chacune des éléments d'encliquetage (10, 11) formés sur le côté intérieur de la paroi latérale (6, 7), éléments qui coopèrent respectivement avec des éléments d'encliquetage complémentaires sur les parties inférieures des tronçons (2, 3) de caniveau de câbles, et sachant qu'une aile de recouvrement (4) présente sur son côté intérieur au moins un tourillon (12) et que l'autre aile de recouvrement (5) présente sur son côté intérieur au moins un trou oblong arqué (13) pour recevoir ce tourillon (12), de sorte que les ailes de recouvrement (4, 5) peuvent être tournées l'une par rapport à l'autre sur une première plage d'angle (W1 à W2) par une rotation autour d'un axe (14) à l'extérieur du guidage (12, 13) à tourillon et trou oblong, avec un mouvement simultané de translation du tourillon (12) dans le trou oblong (13) jusqu'à l'atteinte d'une position de butée du tourillon (12) à l'extrémité (15) du trou oblong, **caractérisée en ce que** les ailes de recouvrement (4, 5) sont chacune pourvues, sur les côtés intérieurs de leurs parois latérales (6, 7), d'au moins une entretoise horizontale (16, 17) qui s'étend respectivement jusqu'à un bord terminal (18, 19) de la paroi latérale (6, 7) qui est tourné vers l'aile de recouvrement voisine (5, 4), sachant que le tourillon (12) ou le trou oblong (13) est respectivement disposé sur ou dans cette entretoise (16, 17) de telle sorte que le tourillon (12) ou l'extrémité (15) du trou oblong est perpendiculaire ou approximativement perpendiculaire par rapport au bord terminal (18, 19) de la paroi latérale (6, 7), et sachant que les bords terminaux (18, 19) des parois latérales (6, 7) sont, quant à leur profil, mutuellement adaptés de telle sorte que, lors d'une rotation sur une deuxième plage d'angle (W2 à W3) autour du tourillon (12) se trouvant en position de butée, ils peuvent rouler en application constante l'un sur l'autre sans former d'interstice entre eux.

2. Pièce moulée d'angle selon la revendication 1, **caractérisée en ce que** les parois latérales (6, 7) des deux ailes de recouvrement (4, 5) sont chacune constituée de deux parties de paroi (6.1, 7.1 ; 6.2, 7.2), à savoir une partie de paroi plane (6.1, 7.1) pour recouvrir la partie inférieure de caniveau de câbles respective et une partie de paroi arquée (6.2, 7.2), qui chevauche la partie de paroi arquée (6.2, 7.2) de l'aile de recouvrement opposée (4, 5) afin de fermer l'angle entre les deux tronçons (2, 3) de caniveau de câbles à relier.

3. Pièce moulée d'angle selon la revendication 2, **caractérisée en ce que** les parties de paroi arquées (6.2, 7.2) des parois latérales (6, 7) des deux ailes de recouvrement (4, 5) viennent s'appliquer à plat l'une contre l'autre dans la première plage d'angle (W1 à W2).

4. Pièce moulée d'angle selon la revendication 2 ou 3, **caractérisée en ce que** l'entretoise (16, 17) s'étend respectivement sur toute la longueur ou sur approximativement toue la longueur de la partie de paroi arquée (6.2, 7.2) de la paroi latérale (6, 7).

5. Pièce moulée d'angle selon l'une des revendications 1 à 4, **caractérisée en ce que**, pour une aile de recouvrement (4) de la pièce moulée d'angle (1), l'entretoise au moins unique (16) est formée sur des branches de soutien (20) faisant saillie de la paroi latérale (6), de sorte qu'un interstice (21) reste présent entre l'entretoise (16) et la paroi latérale (6).

6. Pièce moulée d'angle selon la revendication 5, **caractérisée en ce que** la paroi latérale (7) de l'autre aile de recouvrement (5) est introduite en ajustement précis ou approximativement en ajustement précis dans l'interstice (21) entre l'entretoise au moins unique (16) et la paroi latérale (6) de la première aile de recouvrement (4), de sorte qu'on obtient un guidage supplémentaire entre les deux ailes de recouvrement (4, 5).

7. Pièce moulée d'angle selon l'une des revendications 1 à 6, **caractérisée en ce que** les bords terminaux (18, 19) des parois latérales (6, 7) des deux ailes de recouvrement (4, 5) sont cintrés en arc.

8. Pièce moulée d'angle selon l'une des revendications 1 à 7, **caractérisée en ce que** l'axe longitudinal (22) du trou oblong (13) s'étend parallèlement à la paroi latérale (7) de l'aile de recouvrement (5), et/ou l'axe longitudinal du tourillon (12) ainsi que l'axe de trou du trou oblong (13) s'étendent respectivement parallèlement aux parois latérales (6, 7) des ailes de recouvrement (4, 5).

9. Pièce moulée d'angle selon l'une des revendications 1 à 8, **caractérisée en ce que** deux entretoises (16) pourvues chacune d'un tourillon (12) sont prévues sur une aile de recouvrement (4) et deux entretoises (17) pourvues chacune d'un trou oblong (13) pour recevoir ces tourillons (12) sont prévues sur l'autre aile de recouvrement (5), sachant que les deux guidages (12, 13) à tourillon et trou oblong sont respectivement positionnés à l'extrémité supérieure et à l'extrémité inférieure des parois latérales (6, 7) des ailes de recouvrement (4, 5).

10. Pièce moulée d'angle selon la revendication 9, **caractérisée en ce que** les tourillons (12) sont respectivement installés sur des côtés différents des deux entretoises (16), de sorte que les directions d'introduction des tourillons (12) dans le trou oblong respectif (13) sont mutuellement opposées.

11. Pièce moulée d'angle selon l'une des revendications 1 à 10, **caractérisée en ce que** les bords libres (23, 24) des parois supérieures (8, 9), à leur extrémité tournée vers l'aile de recouvrement opposée (4, 5), se rejoignent respectivement en formant une pointe triangulaire (25, 26), sachant que, dans la première plage d'angle (W1 à W2), ces pointes (25, 26) des deux ailes de recouvrement (4, 5) reposent l'une sur l'autre sans porte-à-faux réciproque et l'axe de rotation (14) est disposé à l'intérieur des pointes superposées (25, 26).

12. Pièce moulée d'angle selon la revendication 11, **caractérisée en ce que** la pointe (25) de la paroi supérieure (8) d'une aile de recouvrement (4), lors de la rotation autour du tourillon (12) se trouvant en position de butée, dépasse de la paroi supérieure (9) de l'autre aile de recouvrement (5), et **en ce que** des marquages ou des zones destinées à la rupture sont prévues sur les parois supérieures (8, 9) dans la région des pointes (25, 26) pour supprimer ce porte-à-faux.

13. Pièce moulée d'angle selon l'une des revendications 1 à 12, **caractérisée en ce que** des éléments d'encliquetage supplémentaires (27, 28) se trouvent sur le côté intérieur des parois supérieures (8, 9) des ailes de recouvrement (4, 5) pour l'assemblage par encliquetage avec la partie inférieure des tronçons respectifs (2, 3) de caniveau de câbles.

14. Pièce moulée d'angle selon l'une des revendications 1 à 13, **caractérisée en ce qu'**il existe un angle de 83° à 97° entre les deux ailes de recouvrement dans la première plage d'angle (W1 à W2).

15. Pièce moulée d'angle selon l'une des revendications 1 à 14, **caractérisée en ce qu'**il existe un angle de 97° à 135° entre les deux ailes de recouvrement (4, 5) dans la deuxième plage d'angle (W2 à W3).
